# DEMANDE DE BREVET EUROPEEN

(11) **EP 3 905 402 A1**
(43) Date de publication de la demande: **03.11.2021**
(21) Numéro de dépôt: 21171232.8
(22) Date de dépôt: 29.04.2021
(51) Int. Cl.: H01M 8/04119, H01M 8/04223, H01M 8/0438, H01M 8/04492, H01M 8/04746

(54) **METHODE DE CONTROLE DE L'HUMIDITE D'UNE PILE A COMBUSTIBLE**

(30) Priorité: 30.04.2020 FR 2004319
(71) Demandeur: SYMBIO, 38600 Fontaine (FR)
(72) Inventeur: PAGANELLI, Gino, 1741 COTTENS (CH); JEANRICHARD-DIT-BRESSEL, Lionel, 1782 FORMANGUEIRES (CH)
(74) Mandataire: Lavoix

(57) **Abrégé**

Méthode de contrôle de l'humidité d'une pile à combustible dans laquelle on fournit de l'hydrogène à une pression nominale (Pₙₒₘ) à l'entrée de la pile, caractérisée en ce que l'on répète, à une périodicité prédéterminée, les étapes suivantes :
- on commande l'ouverture d'une vanne de purge (2) de l'hydrogène agencée sur la sortie du circuit anodique (10) ;
- on mesure la pression de l'hydrogène à l'entrée du circuit anodique de la pile et on compare la valeur mesurée avec une valeur seuil de la pression (P_{low}),
- on ferme la vanne de purge lorsque la pression mesurée est égale ou inférieure à la valeur de seuil prédéterminée de la pression (P_{low}) et
- on mesure la durée d'ouverture de la vanne de purge (2) et
- on en déduit le niveau d'humidité relative régnant à la cathode de la pile.

## Description

### DOMAINE TECHNIQUE ET ÉTAT DE LA TECHNIQUE ANTÉRIEURE

La présente invention se rapporte aux piles à combustible, en particulier aux piles à combustible à membrane polymère alimentées en hydrogène et concerne une méthode de contrôle de l'humidité d'une pile à combustible permettant de détecter un niveau d'humidité relative excessive régnant à la cathode de la pile.

Les piles à combustible sont utilisées comme source d'énergie dans diverses applications, notamment dans les véhicules électriques. Dans les piles à combustible du type à électrolyte à membrane polymère (PEMFC), on utilise l'hydrogène comme combustible qui est fourni à l'anode de la pile à combustible, alors qu'à la cathode est fourni l'oxygène en tant que comburant. Les piles à combustible à membrane polymère (PEMFC) comprennent un assemblage membrane-électrode (MEA pour Membrane Electrode Assembly) comprenant une membrane électrolytique en polymère solide échangeuse de protons et non conductrice de l'électricité, ayant le catalyseur anodique sur l'une de ses faces et le catalyseur cathodique sur la face opposée. Un assemblage membrane-électrode (MEA) est pris en sandwich entre une paire d'éléments électriquement conducteurs, ou plaques bipolaires, moyennant des couches de diffusion de gaz, couches réalisées par exemple en tissu de carbone. Les plaques bipolaires sont généralement rigides et thermiquement conductrices. Elles servent principalement de collecteurs de courant pour l'anode et la cathode et comportent par ailleurs des canaux pourvus d'ouvertures appropriées pour répartir les réactifs gazeux de la pile à combustible sur les surfaces des catalyseurs d'anode et de cathode respectifs et pour évacuer l'eau produite à la cathode. Une cellule de pile à combustible est ainsi formée par un MEA, incluant les couches de diffusion de gaz, et deux plaques monopolaires.

Une pile à combustible peut comprendre une cellule unique ou une pluralité de cellules réalisées sous forme d'un empilement de plaques. Un empilement est ainsi constitué de plusieurs cellules individuelles reliées en série.

En fonctionnement, une tension électrique est produite aux bornes de la pile suite à une réaction d'oxydation électrochimique de l'hydrogène à l'anode et à une réaction électrochimique de réduction de l'oxygène à la cathode. Les résultants de ces réactions sont la production de l'électricité aux bornes des électrodes, ainsi que de l'eau et de la chaleur à la cathode de la pile.

Pour optimiser le fonctionnement d'une pile à combustible de type PEMFC et donc la quantité d'électricité produite par la pile, on doit contrôler l'humidité de la pile. Plus précisément, les membranes polymère utilisées en tant qu'électrolyte dans les piles à combustible de type PEMFC ont besoin d'humidité pour assurer une bonne conductivité protonique. En revanche, lorsque l'humidité est excessive à la cathode, et en particulier proche ou au-delà de la saturation, de l'eau liquide se forme et risque de provoquer le noyage de la couche active et le flux gazeux ne circule plus correctement, ce qui a des conséquences négatives sur le bon fonctionnement, donc sur la production d'électricité de la pile, mais également sur sa durée de vie.

Il est connu de JP2011/216341 de piloter une vanne de purge à partir de la pression qui règne au sein d'un séparateur gaz-liquide, sans que cela ne serve à connaître le niveau d'humidité dans une pile à combustible.

On connaît dans l'état de la technique des solutions relatives à l'utilisation d'un capteur d'humidité installé sur le circuit d'alimentation en hydrogène de la pile et/ou sur le circuit d'alimentation en oxygène reliés à un circuit de contrôle qui commande le fonctionnement de la pile en fonction de valeurs reçues des capteurs d'humidité. Par exemple, le document JP2009/129684 décrit une méthode de contrôle d'une pile à combustible qui commande la diminution de la puissance générée par la pile lorsque les capteurs d'humidité installés sur le circuit cathodique et sur le circuit anodique détectent un niveau d'humidité inférieur à une limite préétablie.

Il a toutefois été constaté que l'ajout d'un ou plusieurs capteurs d'humidité dans une pile à combustible rend complexe le fonctionnement de celle-ci et nécessite une prise en compte de la maintenance des capteurs, notamment en vue des problèmes de corrosion et de perte de précision qui s'ensuit.

Par ailleurs, lorsque l'humidité est excessive à la cathode, elle tend à provoquer un excès d'eau liquide également à l'anode selon un mécanisme de rétrodiffusion et, afin d'assurer un bon fonctionnement de la pile, il est nécessaire d'évacuer l'eau en excès à l'anode par des purges périodiques. La nécessité de connaître le niveau d'humidité à la cathode se fait sentir dans ce cas également, or, il est difficile d'embarquer un capteur d'humidité à la sortie cathodique d'une pile à combustible.

### EXPOSÉ DE L'INVENTION

Un objectif de l'invention est de remédier au moins en partie aux inconvénients précités et de proposer une solution robuste et fiable permettant de mesurer l'humidité excessive au sein de la pile, tout en permettant l'évacuation d l'eau liquide présente à l'anode.

L'objet de l'invention est atteint avec une méthode de contrôle de l'humidité d'une pile à combustible dans laquelle on fournit de l'hydrogène à une pression nominale (Pₙₒₘ) à l'entrée de la pile, caractérisée en ce que l'on répète, à une périodicité prédéterminée, les étapes suivantes :
- on commande l'ouverture d'une vanne de purge de l'hydrogène agencée sur la sortie du circuit anodique ;
- on mesure la pression de l'hydrogène à l'entrée du circuit anodique de la pile et on compare la valeur mesurée avec une valeur seuil prédéterminée de la pression (P_{low})
- on ferme la vanne de purge lorsque la pression mesurée est égale ou inférieure à la valeur de seuil prédéterminée de la pression (P_{low})
- on mesure le temps écoulé entre l'ouverture et la fermeture de la vanne de purge et
- on en déduit le niveau d'humidité régnant dans la pile.

Dans une pile à combustible à membrane échangeuse de protons, l'eau est produite à la cathode. Cependant, il a été démontré expérimentalement que de l'eau liquide apparaît en sortie anodique lorsque l'humidité en sortie cathodique augmente, en raison d'un phénomène de rétrodiffusion. Ce phénomène est dû principalement à la perméabilité de la membrane qui permet le passage d'une partie de l'eau produite à la cathode vers l'anode à travers la membrane. Dans la méthode de l'invention, on ouvre la vanne de purge afin d'évacuer l'eau liquide présente à l'anode et des gaz en effectuant en même temps un monitoring des valeurs de la pression à l'entrée de la vanne de purge. Selon l'invention, la vanne de purge reste ouverte jusqu'à ce qu'une limite basse de la pression mesurée est atteinte. De ce fait, la durée d'ouverture de la vanne de purge s'adapte à la quantité d'eau présente à l'anode. En effet, l'eau liquide étant plus visqueuse que le gaz, en l'occurrence l'hydrogène, plus il y a d'eau à la anode, plus il faudra du temps pour atteindre la valeur basse P_{low} de la pression et donc plus longtemps la vanne de purge doit rester ouverte. Ainsi, on adapte la durée de la purge automatiquement en fonction de la quantité d'eau présente à l'anode afin de purger le juste nécessaire quelles que soient les conditions et ceci en utilisant un seul capteur, le capteur de mesure de la pression de l'hydrogène à l'entrée de la pile. De surcroît, la durée d'ouverture de la vanne de purge peut donc avantageusement être utilisée comme indicateur de présence d'eau liquide à l'anode. Selon l'invention, en mesurant la durée d'ouverture de la vanne de purge, on en déduit le niveau d'humidité au sein de la pile. De ce fait, on peut s'assurer que l'humidité en sortie côté cathode ne dépasse pas un niveau critique, où l'on peut agir sur le fonctionnement de la pile le cas échéant, et ceci sans avoir besoin d'embarquer un capteur d'humidité.

De façon avantageuse, on peut ajuster le fonctionnement de la pile lorsque la durée d'ouverture de la vanne de purge dépasse une valeur préétablie afin d'assurer un fonctionnement optimum de la pile.

On peut calculer une moyenne de plusieurs mesures successives de la durée d'ouverture de la vanne de purge pour en déduire le niveau d'humidité, ce qui permet d'avoir une mesure fiable et d'éviter le bruit de mesure.

Selon un aspect de l'invention, on peut mesurer la durée d'ouverture de la vanne de purge et on peut adapter ladite périodicité en fonction de la durée mesurée. Tel qu'expliqué plus haut, la durée de la purge s'allonge automatiquement en cas de présence d'eau à l'anode de façon à compenser le temps pendant lequel la vanne évacue de l'eau et non pas du gaz. Ainsi, le temps d'ouverture de la vanne de purge augmente avec la quantité d'eau liquide présente à l'anode. De ce fait, plus le temps s'allonge, plus on rapproche les purges, de manière à adapter la périodicité des purges en fonction de la durée de l'ouverture de la vanne de purge, et à pouvoir évacuer toute quantité d'eau excédentaire à l'anode de manière efficace.

L'alimentation en hydrogène de la pile peut se faire à partir d'un réservoir moyennant une électrovanne proportionnelle pilotée par un régulateur de pression relié à un capteur de pression. Ceci permet un réglage précis de la pression d'alimentation de la pile à combustible, le régulateur de pression étant relié à un capteur de pression placé à l'entrée de la pile pour contrôler l'ouverture de l'électrovanne.

Ledit régulateur de pression peut être désactivé pendant la durée d'ouverture de la vanne de purge. Ceci afin que la contre-réaction de la vanne proportionnelle ne vienne perturber l'évolution de la pression pendant la purge. Le régulateur est réactivé immédiatement après la fermeture de la vanne de purge.

Selon un aspect avantageux de l'invention, les valeurs de la pression P_{low} peuvent être comprises entre 70 et 95% de Pₙₒₘ. Lors des tests effectués en laboratoire, il s'est avéré que pour cette plage de valeurs de la pression, on arrivait à purger correctement une pile à combustible dans toutes les conditions de fonctionnement de celle-ci. La valeur P_{low} peut être constante ou adaptée en fonction des conditions de fonctionnement, par exemple en fonction du courant produit par la pile à combustible.

Les valeurs de la pression Pₙₒₘ peuvent être comprises entre 1,2 et 2 bar.

Ladite périodicité peut être comprise entre 2s et 20s pour une durée d'ouverture de la vanne de purge qui peut être comprise entre 500ms et 100ms. Ainsi, pour une durée d'ouverture longue les purges sont rapprochées et elle augmente avec la diminution de la durée d'ouverture de la vanne de purge lors d'une purge préalable.

Selon la méthode de l'invention, lors de l'ouverture de la vanne de purge on peut mesurer la durée au bout de laquelle on atteint la valeur P_{low} en partant de la valeur Pₙₒₘ et on la compare à une valeur maximum. Si la durée mesurée dépasse celle maximum, on arrive à identifier une situation de blocage en position fermée de la vanne de purge.

On peut par ailleurs, lors de la fermeture de la vanne de purge, mesurer la durée au bout de laquelle on atteint la valeur Pₙₒₘ en partant de la valeur P_{low} et la comparer à un intervalle de temps. Si la durée mesurée dépasse cet intervalle, on comprend que la pression n'atteint pas la valeur Pₙₒₘ et on en déduit un blocage en position ouverte de la vanne de purge.

Avantageusement, lorsque la durée d'ouverture de la vanne de purge est en deçà d'une valeur de seuil, on en déduit que le niveau d'humidité régnant à la cathode est dans une gamme inférieure à une valeur de seuil.

Selon un autre aspect avantageux, lorsque la durée d'ouverture de la vanne de purge est au-delà d'une valeur de seuil, on en déduit que le niveau d'humidité régnant à la cathode est dans une gamme supérieure à une valeur de seuil et on détermine la valeur du niveau d'humidité sur la base d'une relation univoque entre la durée d'ouverture et le niveau d'humidité.

L'objet de l'invention est également atteint avec un dispositif de mise en oeuvre de la méthode selon l'invention, qui comprend vanne de purge, un capteur de pression et une unité de contrôle d'une pile à combustible.

Un autre objet de l'invention est l'utilisation du dispositif de mise en oeuvre de la méthode selon l'invention dans une pile à combustible.

### BRÈVE DESCRIPTION DES DESSINS

L'invention sera mieux comprise grâce à la suite de la description, qui s'appuie sur les figures suivantes :
[Fig. 1] est une vue schématique du dispositif de mise en oeuvre de la méthode de l'invention ;
[Fig. 2] est une représentation graphique illustrant l'évolution de la pression en fonction du temps ;
[Fig. 3] est une représentation graphique illustrant la relation entre la durée d'ouverture de la vanne de purge et la périodicité des purges ;
[Fig. 4] est une représentation graphique illustrant la relation entre la quantité d'eau liquide à l'anode et l'humidité régnant à la cathode d'une pile à combustible ;
[Fig. 5] est une représentation graphique illustrant la variation de la durée de purge en fonction de l'humidité régnant à la cathode d'une pile à combustible.

Sur les différentes figures, les éléments identiques ou similaires portent la même référence. Leur description n'est donc pas systématiquement reprise.

### EXPOSÉ DÉTAILLÉ DE MODES DE RÉALISATION PARTICULIERS

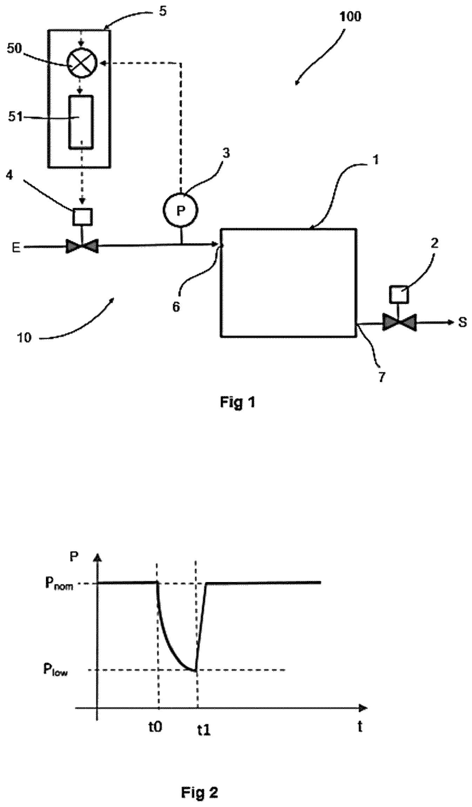

La figure 1 illustre de manière schématique un dispositif 100 de mise en œuvre de la méthode de l'invention installé sur le circuit anodique 10 d'une pile à combustible 1. Plus particulièrement, la figure 1 illustre la topologie du circuit anodique 10 de la pile entre une entrée E d'hydrogène, par exemple en provenance d'un réservoir d'hydrogène sous pression (non illustré) et une sortie S de la pile à pression atmosphérique. La pile à combustible 1 est alimentée en hydrogène par le biais d'une électrovanne proportionnelle 4. Cette électrovanne est pilotée par un régulateur 5 pour maintenir la pression à l'entrée 6 de la pile à une valeur prédéterminée. Pour ceci, on installe un capteur de pression 3 sur le circuit anodique juste avant l'entrée 6 de l'hydrogène dans la pile à combustible 1 et on le relie à l'entrée du régulateur 5. Le régulateur 5 est du type généralement connu, il fonctionne à l'aide d'un signal pseudo-analogique à modulation de largeur d'impulsion (connu aussi sous le nom de PWM pour Pulse With Modulation). Plus particulièrement, le signal de mesure en provenance du capteur 3 arrive au niveau d'un comparateur 50 du régulateur qui reçoit une valeur de consigne. La valeur sortant du comparateur 50 est transmise à une unité de commande 51 du régulateur qui actionne l'électrovanne proportionnelle 4. La consigne de pression Pₙₒₘ est générée par le contrôleur de la pile à combustible. Elle peut être constante ou adaptée en fonction des conditions de fonctionnement, par exemple en fonction du courant produit par la pile à combustible.

Tel que visible à la figure 1, on installe sur le circuit anodique 10, après la sortie 7 de la pile, une électrovanne de purge 2 de type « tout ou rien » qui est pilotée par une unité de contrôle de la pile (non représentée). La purge 2 est de préférence positionnée à un point bas du collecteur de sortie du circuit anodique de façon à pouvoir drainer l'eau liquide.

Dans une variante, non illustrée, on rajoute dans le circuit anodique 10 un moyen de recirculation d'hydrogène comportant par exemple un éjecteur Venturi agencé entre l'électrovanne proportionnelle 4 et le capteur de pression 3 de manière à recirculer une partie du gaz en sortie 7 avant la vanne de purge 2.

La figure 2 représente de manière graphique le principe de mesure du temps d'ouverture de la vanne de purge 2, les valeurs du temps, en secondes, étant représentées en abscisse et celles de la pression, en bars, en ordonnée. La pression anodique à l'entrée 6 dans la pile est régulée à une valeur de consigne de pression Pₙₒₘ par le biais de la vanne proportionnelle 4 et du régulateur 5. L'unité de contrôle de la pile commande l'ouverture de la vanne de purge 2. Dès que la vanne purge est ouverte à l'instant t0, on observe une diminution rapide de la pression d'hydrogène mesurée par le capteur de pression 3. Quand la pression atteint le seuil P_{low}, la vanne de purge 2 est refermée. La durée d'ouverture T de la vanne de purge, égale à t1 - t0, est utilisée par le calculateur comme indicateur de présence d'eau à l'anode. En effet, on observe que plus il y a d'eau liquide à la sortie de l'anode et plus le temps pour atteindre la pression P_{low} sera long en raison de la très haute viscosité ou densité de l'eau et du temps qu'elle met pour s'échapper par la vanne de purge en comparaison à la situation où il n'y aurait que du gaz à être évacué par cette même vanne de purge. Pendant le temps d'ouverture de la vanne de purge 2, la commande issue du régulateur de pression 5 est figée à la valeur présente à l'instant précédent la purge de façon à ce que la contre réaction de la vanne proportionnelle 4 ne vienne pas perturber l'évolution de la pression pendant la purge. Immédiatement après la purge, le régulateur de pression est libéré et activera à nouveau la vanne proportionnelle 4 pour remonter à la pression cible Pₙₒₘ.

La durée T de la purge s'adapte donc automatiquement en fonction de la quantité d'eau liquide à l'anode. Plus il y aura d'eau et plus le temps pour atteindre la pression P_{low} sera important. Le temps de purge s'allongera automatiquement en cas de présence d'eau de façon à tendre à compenser le temps de purge pendant laquelle la vanne de purge 2 était occupée à évacuer de l'eau et non du gaz.

Selon l'invention, la durée d'ouverture de la vanne de purge T= t1 - t0 est utilisée pour déterminer le niveau d'humidité à la cathode de la pile.

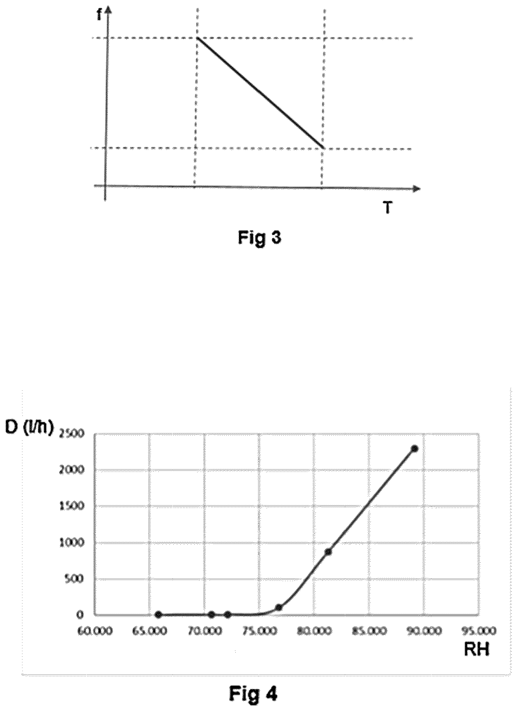

L'eau produite par une pile à combustible apparaît normalement à la cathode. On démontre cependant expérimentalement que de l'eau liquide apparaît en sortie à l'anode lorsque l'humidité en sortie à la cathode augmente et cela en raison d'un phénomène de rétrodiffusion. En effet, on a représenté à la figure 4, en ordonnée, la quantité d'eau présente à l'anode par son débit volumique D, mesuré en l/h et, en abscisse, le taux d'humidité relative (RH), mesuré en laboratoire à la sortie cathodique d'une pile à combustible à membrane échangeuse de protons (PEMFC) comportant 256 cellules à 300 A. Ainsi, on note que, à partir d'un certain seuil, le débit d'eau à la sortie anodique augmente avec l'humidité présente à la cathode. Ainsi, jusqu'à 75% RH (humidité relative), il n'y a pas ou peu d'eau liquide en sortie anodique, de l'eau liquide en sortie anodique commence à apparaître à partir de ce seuil et la quantité d'eau liquide présente à l'anode augmente fortement ensuite. On constate donc que l'eau liquide n'est pas présente sur la sortie anodique lorsque le taux d'humidité relative mesuré à la cathode est inférieur ou égal à 75%. Or, ce seuil de 75% RH est celui qui correspond au fonctionnement recommandé d'une pile à combustible.

Comme expliqué plus haut, on effectue des purges périodiques à la sortie anode utilisant le dispositif de la figure 1. Selon le fonctionnement de ce dispositif, le temps d'ouverture de la vanne de purge 2 en sortie anodique s'adapte automatiquement en fonction de la quantité d'eau liquide présente à la sortie anodique. Selon l'invention, on mesure la durée d'ouverture de la vanne de purge 2 et l'on utilise ensuite comme indicateur de présence d'eau liquide en sortie anodique. Ensuite, en fonction de valeurs mesurées de la durée d'ouverture de la vanne de purge, on en déduit la quantité d'eau liquide présente en sortie anodique et on détermine le niveau d'humidité à la cathode de la pile à combustible.

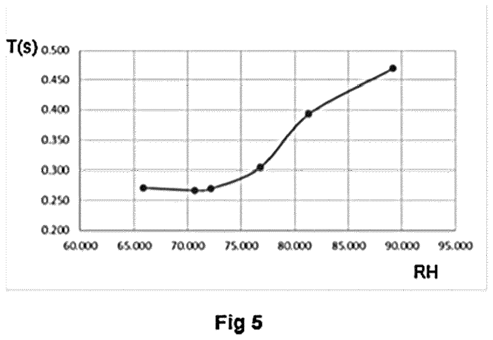

Pour la même pile que celle utilisée pour tracer le graphique de la figure 4, on a mesuré expérimentalement en laboratoire les valeurs utilisées pour tracer le graphique de la figure 5. Ainsi, on a en représenté, en ordonnée, la durée d'ouverture, en secondes, de la vanne de purge 2 à la sortie anodique et, en abscisse, le taux d'humidité relative, en %, mesurée à la sortie cathodique de la pile. On observe ainsi que le temps d'ouverture de la vanne de purge 2 est constant et inférieur à 0.3 s lorsque l'humidité relative mesurée à la cathode est inférieure à 75%, c'est-à-dire, pour un fonctionnement recommandé de la pile. Ainsi, lorsque la durée d'ouverture de la vanne de purge 2 est inférieure à 0.3 s, on peut en déduire que le niveau d'humidité relative régnant à la cathode est inférieur à 75%.

Lorsque, lorsque la durée d'ouverture de la vanne de purge 2 est supérieure à 0.3 s, on peut déduire le niveau d'humidité relative régnant à la cathode à partir du graphique de la figure 5, à droite de la valeur de 75%. Dans ce cas, l'information obtenue est plus précise que dans le cas où le taux d'humidité relative est inférieure à 75%. En effet, on déduit de la durée d'ouverture de la vanne de purge 2 non seulement le fait que le niveau d'humidité régnant à la cathode est supérieur à 75% mais également quelle est la valeur de ce taux d'humidité.

La valeur de 75% indiqué ci-dessus est un exemple et peut varier en fonction de la structure et des conditions de fonctionnement de la pile à combustible 1, notamment du nombre de ses cellules. Cette valeur est une première valeur de seuil S1.

De même, la valeur de 0.3 s est un exemple et peut varier en en fonction de la structure et des conditions de fonctionnement de la pile à combustible 1, notamment du nombre de ses cellules. Cette valeur est une deuxième valeur de seuil S2 préétablie.

Dans le cas où la durée d'ouverture est inférieure à la valeur de seuil S2, la déduction ou détermination du niveau d'humidité est faite dans une gamme, à savoir entre 0 et la valeur de seuil S1, entre 0 et 75% dans l'exemple.

Dans le cas où la durée d'ouverture est supérieure à la valeur de seuil S2, la durée d'ouverture de la vanne de purge 2 mesurée est comprise entre 0.3 et 0.5 s, le taux d'humidité relative à la cathode augmente pour atteindre environ 90% RH et la déduction ou détermination du niveau d'humidité est faite à la fois dans une gamme, à savoir au-delà de cette valeur de seuil S1, et de façon précise, grâce à la relation univoque entre le taux d'humidité RH et la durée d'ouverture T représentée par la courbe visible à droite de la valeur de seuil S1=75% à la figure 5.

Dans ce cas également, la durée d'ouverture de la vanne de purge côté anodique est envoyée à l'unité de contrôle de la pile qui agit sur ses paramètres de fonctionnement, tels : l'humidification (lorsqu'elle est gérée activement), la pression, la stœchiométrie ou la température ou tout autre paramètre pouvant modifier le niveau d'humidité pour optimiser le fonctionnement de cette dernière. Ainsi, dans le cas où la durée d'ouverture de la vanne de purge est supérieure à la deuxième valeur de purge S2, les paramètres de fonctionnement de la pile à combustible sont ajustés.

Dans une variante, l'unité de contrôle de la pile enregistre les valeurs mesurées de la durée d'ouverture de la vanne de purge 2 sur plusieurs mesures successives et calcule ensuite une moyenne de ces valeurs avant de prendre une décision déterminée par la présence de l'eau liquide à l'anode. Ceci permet d'éviter le bruit de mesure sur la durée d'ouverture de la vanne de purge.

Selon un autre aspect avantageux de l'invention, en plus de l'adaptation automatique de la durée de la purge, en cas de présence d'eau, le temps entre deux purges successives ou période est également réduit pour une meilleure compensation. La figure 3 montre la relation entre la durée T en secondes de la purge mesurée par l'unité de contrôle de la pile et la périodicité f en secondes appliquée entre les purges. On voit que plus la durée de purge est longue, révélant une présence d'eau de plus en plus importante, plus les purges successives seront rapprochées pour favoriser l'évacuation de l'eau en excès et assurer une purge suffisante en dépit de la présence d'eau. Cette cartographie est prédéterminée au moyen d'une calibration fine préalable pour garantir que l'eau liquide à l'anode soit suffisamment drainée afin de ne pas dégrader la pile, mais sans provoquer une évacuation en excès pour ne pas gaspiller d'hydrogène, et cela dans toutes les conditions de fonctionnement de la pile à combustible.

Par exemple, la périodicité des purges pourra varier de 2s à 20s pour une durée d'ouverture variant respectivement de 500ms à 100ms. La première purge est déclenchée par l'unité de contrôle de la pile après un temps de fonctionnement préétabli, par exemple après quelques secondes de mise en fonctionnement de la pile. On utilise ensuite une valeur de sortie (la durée d'ouverture de la vanne de purge) pour déterminer la périodicité des purges suivantes.

Dans une variante, on peut définir une durée d'ouverture minimum et une durée d'ouverture maximum de la vanne de purge 2 et stocker ces valeurs dans la mémoire de l'unité de contrôle de la pile de façon à détecter les cas de défaillance (lorsque la vanne de purge 2 est bloquée en étant fermée ou ouverte ou encore une éventuelle anomalie sur le circuit d'hydrogène).

Alternativement, on peut observer la cohérence de l'évolution de la pression à l'entrée du circuit anodique. Pour la détection de vanne de purge bloquée fermée on peut contrôler l'atteinte de la valeur de pression P_{low} au terme de la durée d'ouverture maximale. Pour la détection de purge bloquée ouverte, on peut contrôler que la pression revienne à Pₙₒₘ après fermeture de la vanne de purge. Ainsi, si lors du fonctionnement, la durée mesurée pour l'atteinte de la valeur de pression P_{low} à partir du moment où l'unité de contrôle commande l'ouverture de la vanne de purge dépasse une valeur maximum préétablie, on peut en déduire que la vanne de purge est bloquée en position fermée. Dans le cas où l'unité de contrôle commande la fermeture de la vanne de purge à partir de la P_{low} et que la pression mesurée n'atteint pas Pₙₒₘ assez rapidement, dans un intervalle de temps préétabli, on peut en déduire que la vanne de purge est bloquée en position ouverte. L'unité de contrôle peut dans ce cas afficher des messages d'erreur correspondant à l'anomalie détectée.

## Revendications

1. Méthode de contrôle de l'humidité d'une pile à combustible dans laquelle on fournit de l'hydrogène à une pression nominale (Pₙₒₘ) à l'entrée de la pile, **caractérisée en ce que** l'on répète, à une périodicité prédéterminée, les étapes suivantes:
- on commande l'ouverture d'une vanne de purge (2) de l'hydrogène agencée sur la sortie du circuit anodique (10) ;
- on mesure la pression de l'hydrogène à l'entrée du circuit anodique de la pile et on compare la valeur mesurée avec une valeur seuil prédéterminée de la pression (P_{low}),
- on ferme la vanne de purge lorsque la pression mesurée est égale ou inférieure à la valeur de seuil prédéterminée de la pression (P_{low})
- on mesure la durée d'ouverture de la vanne de purge (2) et
- on en déduit le niveau d'humidité régnant à la cathode de la pile.

2. Méthode selon la revendication 1, **caractérisée en ce qu'**on ajuste le fonctionnement de la pile lorsque la durée d'ouverture de la vanne de purge (2) dépasse une valeur préétablie (S2).

3. Méthode selon l'une des revendications 1 ou 2, **caractérisée en ce que** l'on calcule une moyenne de plusieurs mesures successives de la durée d'ouverture de la vanne de purge (2) pour en déduire le niveau d'humidité.

4. Méthode selon l'une des revendications précédentes, **caractérisée en ce que** l'alimentation en hydrogène de la pile (1) se fait à partir d'un réservoir moyennant une électrovanne proportionnelle (4) pilotée par un régulateur de pression (5) relié à un capteur de pression (3).

5. Méthode selon la revendication 4, **caractérisée en ce que** ledit régulateur de pression (5) est désactivé pendant la durée d'ouverture de la vanne de purge (2).

6. Méthode selon l'une des revendications précédentes, **caractérisée en ce que** les valeurs seuil prédéterminées de la pression (P_{low}) sont comprises entre 70 et 95% de la pression nominale (Pₙₒₘ).

7. Méthode selon l'une des revendications précédentes, **caractérisée en ce que** les valeurs de la pression nominale (Pₙₒₘ) sont comprises entre 1,2 et 2 bars.

8. Méthode selon l'une des revendications précédentes, **caractérisée en ce que** l'on **en ce qu'**on adapte ladite périodicité en fonction de la durée d'ouverture de la vanne de purge (2) lors d'une purge préalable.

9. Méthode selon l'une des revendications précédentes, **caractérisée en ce que** ladite périodicité est comprise entre 2s et 20s pour une durée d'ouverture de la vanne de purge (2) comprise entre 500ms et 100ms.

10. Méthode selon l'une des revendications précédentes, **caractérisée en ce que** lors de l'ouverture de la vanne de purge on mesure la durée au bout de laquelle on atteint la valeur de seuil prédéterminée (P_{low}) en partant de la pression nominale (Pₙₒₘ) et **en ce qu'**on la compare à une valeur maximum et **en ce qu'**on déduit que la vanne de purge (2) est boquée en position fermée si cette durée dépasse cette valeur maximum.

11. Méthode selon l'une des revendications précédentes, **caractérisée en ce que** lors de la fermeture de la vanne de purge (2) on mesure la durée au bout de laquelle on atteint la pression nominale (Pₙₒₘ) en partant de la valeur de seuil prédéterminée (P_{low}) et on la compare à un intervalle de temps et **en ce qu'**on déduit que la vanne de purge est bloquée en position ouverte si cette durée dépasse cet intervalle de temps.

12. Méthode selon l'une des revendications précédentes, **caractérisée en ce que**, lorsque la durée d'ouverture de la vanne de purge (2) est en deçà d'une valeur de seuil (S2), on en déduit que le niveau d'humidité régnant à la cathode est dans une gamme inférieure à une valeur de seuil (S1).

13. Méthode selon l'une des revendications précédentes, **caractérisée en ce que**, lorsque la durée d'ouverture de la vanne de purge (2) est au-delà d'une valeur de seuil (S2), on en déduit que le niveau d'humidité régnant à la cathode est dans une gamme supérieure à une valeur de seuil (S1) et on détermine la valeur du niveau d'humidité sur la base d'une relation univoque entre la durée d'ouverture et le niveau d'humidité.

14. Dispositif comprenant une vanne de purge (2), un capteur de pression (3) et une unité de contrôle d'une pile à combustible pour la mise en œuvre de la méthode selon l'une des revendications précédentes.

15. Utilisation d'un dispositif selon la revendication 14 dans une pile à combustible.
